# EUROPEAN PATENT APPLICATION

(11) **EP 4 826 300 A1**
(43) Date of publication of application: **21.10.2026**
(21) Application number: 26172222.7
(22) Date of filing: 14.04.2026
(51) Int. Cl.: F24D 17/00

(54) **SHOWER PIPE FOR HEAT RECOVERY AND METHOD FOR MANUFACTURING A SHOWER PIPE**

(30) Priority: 15.04.2025 NL 2040178
(71) Applicant: Counter Flow Products B.V., 8013RV Zwolle (NL)
(72) Inventor: de Wit, Gertjan Jelle, 8013RW Zwolle (NL)
(74) Representative: Arnold & Siedsma

(57) **Abstract**

The invention relates to a shower pipe for heat recovery, wherein de shower pipe comprises:
- an inner pipe which is configured to feed through discharged shower water;
- an outer pipe which is arranged over the inner pipe, wherein an intermediate space lying between the inner pipe and the outer pipe is configured to feed through supplied shower water such that heat from the discharged shower water can be relinquished to the supplied shower water; and
- an insert which is arranged in the intermediate space and which is configured to break down the flow of the supplied shower water; and
- a connecting element which is arranged on an end part of the outer pipe, wherein the connecting element is provided with at least one protruding element, wherein the insert is connected to the protruding element.

## Description

The present invention relates to a shower pipe for heat recovery and a shower provided with such a shower pipe. The invention further relates to a method for manufacturing a shower pipe.

Devices wherein heat is recovered from shower water are known in practice. One of the known devices comprises a shower pipe which is provided with a heat exchanger which is connected to the drain of a shower. In the heat exchanger the heat of the shower water is relinquished to supplied water. The heat exchanger is usually situated under the drain. The supplied water can then be carried to the mixer tap of the shower while already preheated by the shower water.

The shower pipe with heat exchanger can be embodied as an inner pipe and an outer pipe arranged therearound. The intermediate space situated between the inner pipe and the outer pipe is configured to feed supplied shower water through to the mixer tap. The inner pipe is configured to feed through the warm discharged shower water. Preferably, the supplied shower water flows through the intermediate space in opposite direction relative to the discharged warm shower water. The warm discharged shower water preferably flows along the inner periphery of the inner pipe in the manner of a film. Because the supplied shower water and the discharged warm shower water flow alongside each other, the heat from the discharged shower water is relinquished to the supplied shower water. Energy is hereby recovered from the already used warm shower water.

The boundary layer of the supplied shower water is the layer which is positioned around the inner pipe. The boundary layer is the layer with the greatest heat transfer, since it is positioned closest to the inner pipe. In the boundary layer the temperature rises gradually from the temperature of the discharged shower water to the temperature of the supplied shower water. The boundary layer has a determined thickness here. The heat transfer is inversely proportional to the thickness of the boundary layer, meaning that a thinner boundary layer results in a greater heat transfer. It is therefore advantageous to disrupt the boundary layer of the discharged warm shower water and the inner pipe, also referred to as breaking down. This is because this reduces the thickness of the boundary layer.

Breakdown of the boundary layer is usually realized by an insert, for instance a wire, which is wound in spiral shape round the inner pipe. The boundary layer normally flows along the outer surface of the inner pipe in axial direction, whereby the boundary layer encounters the insert and is broken. This improves the heat transfer between the supplied shower water and discharged warm shower water. The insert can be a copper wire.

The insert is attached to the inner pipe and/or outer pipe by means of an adhesive, for instance glue. A drawback of this attachment is that it makes the production time of the shower pipe relatively long, since it is necessary to wait for the glue to dry for good adhesion of the insert to the inner pipe.

The present invention has for its object to obviate or at least reduce the above stated problems. It can be a particular object of the invention to provide a shower pipe with a reduced production time.

This object is achieved with a shower pipe for heat recovery, wherein the shower pipe comprises:
- an inner pipe which is configured to feed through discharged shower water;
- an outer pipe which is arranged over the inner pipe, wherein an intermediate space lying between the inner pipe and the outer pipe is configured to feed through supplied shower water such that heat from the discharged shower water can be relinquished to the supplied shower water; and
- an insert which is arranged in the intermediate space and which is configured to break down the flow of the supplied shower water; and
- a connecting element which is arranged on an end part of the outer pipe, wherein the connecting element is provided with at least one protruding element, wherein the insert is connected to the protruding element.

An advantage of the connection between the insert and the protruding element is that a mechanical connection is possible. It is thus for instance possible to connect the insert by clamping, winding and/or knotting. Because the insert can be connected to the protruding element of the connecting element in this way, it is no longer necessary to wait for the adhesive to harden during production. This greatly reduces the production time of the shower pipe. A further advantage hereof is that production of the shower pipe can be made less expensive.

A further advantage of connecting the insert to the protruding element is that the connecting can be performed at least partially automatically. Particularly, it is no longer necessary for a worker to glue the insert onto the inner pipe manually. The automation reduces the production costs and/or increases the production speed.

Yet another advantage of mechanically connecting the insert to the protruding element is that the chances of production errors in the shower pipe are reduced. The mechanical connection has been found in practice to be a stronger connection than the glue connection. This is particularly because a glue connection is prone to faults in several aspects. The applied amount of glue being too small or the adhering time being too short may thus result in insufficient adhesion of the insert to the inner pipe. With the mechanical connection the insert is less likely to come loose, this increasing the lifespan of the shower pipe.

The outer pipe is preferably arranged coaxially over the inner pipe.

The flow of the supplied shower water is preferably opposite to the flow of the discharged (warm) shower water. Preferably, the flow of the supplied shower water is in the intermediate space between the inner pipe and the outer pipe, and the flow of the discharged shower water is in the inner pipe. The warm discharged shower water preferably flows along the inner periphery of the inner pipe in the manner of a film.

The insert is configured to break down the boundary layer of the supplied shower water lying around the outer periphery of the inner pipe, whereby the thickness of the boundary layer of the supplied shower water is reduced.

In an embodiment the connecting element is annular.

Because it is annular, the connecting element can be arranged on an end edge of the outer pipe in simple manner. A further advantage of the annular connecting element is that the protruding elements can be placed on the connecting element in radially distributed manner, whereby the insert can be connected to the protruding element irrespective of the placement of the connecting element on the outer pipe.

In an embodiment the protruding element is a tongue or protrusion.

An advantage of the tongue or protrusion is that the insert can be connected to the protruding element in effective manner. It is thus for instance possible to fasten the insert to the protruding element by winding, clamping and/or knotting.

In an embodiment the tongue or protrusion is provided with a clamping recess for clamping of the insert.

The clamping recess is preferably provided on the transition from the tongue or protrusion to the annular part of the connecting element. In this embodiment the connecting element comprises an annular body and a tongue or protrusion provided thereon or connected fixedly thereto.

Owing to the clamping recess, the insert can be clamped between the tongue or protrusion and the annular body in simple manner. This provides for additional securing of the insert, which reduces the chances of the insert coming loose still further.

In an embodiment the shower pipe further comprises a housing arranged round the connecting element for the purpose of securing the connecting element onto the outer pipe.

Owing to the housing, the connecting element can be secured onto the outer pipe in effective manner. Because the housing is preferably placed over the connecting element and the outer pipe, the connecting element can effectively be attached onto or to the outer pipe from all sides, i.e. all the way around.

The housing is preferably an element which is arranged at least partially around the periphery of the outer pipe. The housing is preferably a cylindrically formed part with a diameter which is greater than the diameter of the outer pipe. The housing can also be referred to as a sleeve or tube.

In an embodiment the housing is connected to the inner pipe, wherein the connection between the housing and the inner pipe preferably comprises a tensively strong connection.

Owing to the tensively strong connection, it is prevented that the housing and/or the connecting element can move in axial direction. The housing and/or the connecting element is hereby secured in effective manner.

In an embodiment the housing further comprises an auxiliary ring which is arranged round an end part of the inner pipe and is provided with a hollow recess, wherein the inner pipe is attached to the auxiliary ring by radial expansion of the inner pipe into the hollow recess of the auxiliary ring.

The auxiliary ring can be both an internal ring, which thus forms part of the housing itself, and a ring placed in the housing. Expansion of the inner pipe into the auxiliary ring connects the housing to the inner pipe in effective manner. This limits movement of the housing in axial direction for the purpose of realizing a tensively strong connection.

In an embodiment the shower pipe further comprises at least one O-ring.

The at least one O-ring prevents water from flowing out of the shower pipe inadvertently.

In an embodiment the at least one O-ring is provided between the connecting element and the housing and/or between the auxiliary ring and the housing.

In an embodiment the insert is a wire, wherein the insert is preferably wound in spiral shape round an outer side of the inner pipe.

An advantage of the wire is that the wire disrupts the boundary layer running over the outer side of the inner pipe in effective manner.

In an embodiment the shower pipe further comprises a fixation element which is arranged round the insert and is configured to centre and fix the insert, preferably fix it radially, relative to the inner pipe.

An advantage of the fixation element is that the insert is held against the outer surface of the outer pipe, whereby the boundary layer is disrupted in effective manner.

In an embodiment the fixation element is a wire, wherein the fixation element is preferably wound in spiral shape round an outer side of the inner pipe and/or the insert.

The fixation element is preferably wound round the insert in spiral shape in opposite direction. The pitch of the fixation element is preferably greater than the pitch of the insert. The diameter of the fixation element is preferably greater than the diameter of the insert. The fixation element is preferably wound round the insert.

The invention further relates to a shower which is provided with a shower pipe according to the invention.

The shower has similar advantages and effects as described for the shower pipe. The features described for the shower pipe can also be applied, separately and in combination, to the shower.

The invention further relates to a method for manufacturing a shower pipe according to the invention, wherein the method comprises of:
- arranging a connecting element which is provided with at least one protruding element on an inner pipe;
- connecting an insert to the at least one protruding element;
- winding the insert around the outer periphery of the inner pipe; and
- inserting the inner pipe into an outer pipe for the purpose of realizing the shower pipe.

The method has similar advantages and effects as described for the shower pipe and the shower. The features described for the shower pipe can also be applied, separately and in combination, to the shower.

Further features, advantages and details of the invention are described on the basis of embodiments thereof, wherein reference is made to the accompanying drawings, in which:
- figure 1 is a perspective view of a shower pipe according to the invention;
- figure 2 is an exploded view of a shower pipe according to the invention;
- figure 3 is a section of an end of a shower pipe according to the invention;
- figure 4A is a first example of a connecting element according to the invention;
- figure 4B is a second example of a connecting element according to the invention;
- figure 5 is a schematic representation of the inside of a shower pipe according to the invention; and
- figure 6 is an example of a shower according to the invention.

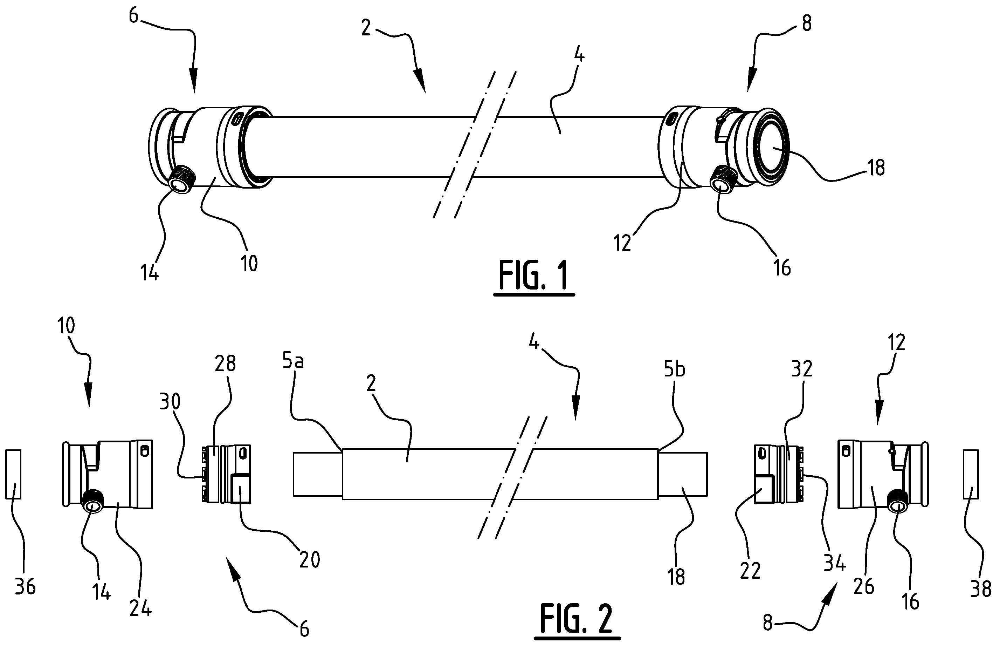

Shower pipe 2 (figure 1) comprises outer pipe 4. Outer pipe 4 extends from first end 6 to second end 8. Arranged on first end 6 is first housing 10. Arranged on second end 8 is second housing 12. An inner pipe (not shown in this figure) is arranged in outer pipe 4. The first housing 10 and second housing 12 are configured to connect connecting elements, to which an insert can be connected, to the inner pipe. First housing 10 and second housing 12 are respectively provided with a first passage 14 and second passage 16. First passage 14 and second passage 16 can be used both as inlet or as outlet of shower water.

Shower pipe 2 (figure 2) is shown in an exploded view. Shower pipe 2 comprises outer pipe 4 which is arranged coaxially round inner pipe 18. The outer diameter of inner pipe 18 is smaller than the inner diameter of outer pipe 4. An intermediate space is hereby created between outer pipe 4 and inner pipe 18. Arranged on first end 6 and second end 8 are respectively first housing 10 and second housing 12. First housing 10 comprises first sub-housing 20 which is placed over outer pipe 4. First sub-housing 20 has a thickened portion which is configured to be inserted into an opening provided in second sub-housing 24. Second sub-housing 24 is provided with first passage 14. In use second sub-housing 24 is thus placed partially over outer pipe 4, wherein an opening in second sub-housing 24 receives a thickened portion of first sub-housing 20. First sub-housing 20 hereby snaps fixedly into second sub-housing 24, whereby a rapid assembly is achieved. A further advantage of this assembly is that no glue is required.

Connecting element 28 is annular and is arranged on edge 5a of outer pipe 4. Connecting element 28 is provided with a plurality of protrusions 30 which are placed on the annular body at regular intermediate distances. The insert can be attached to protrusions 30.

Second housing 12 comprises first sub-housing 22 which is placed over outer pipe 4. First sub-housing 22 has a thickened portion which is configured to be inserted into an opening provided in second sub-housing 26. Second sub-housing 26 is provided with second passage 16. In use second sub-housing 26 is thus placed partially over outer pipe 4, wherein an opening in second sub-housing 26 receives a thickened portion of first sub-housing 22.

Connecting element 32 is annular and is arranged on edge 5b of outer pipe 4. Connecting element 32 is provided with a plurality of protrusions 34 which are placed on the annular body at regular intermediate distances. The insert can be attached to protrusions 34.

The insert can for instance be attached at first end 6 to protrusions 30 of connecting element 28 and then be wound round inner pipe 18 in spiral shape. The insert is here wound from first end 6 to second end 8. At second end 8 the insert is attached to protrusions 34 of connecting element 32. The insert is thus attached in shower pipe 2 in effective manner.

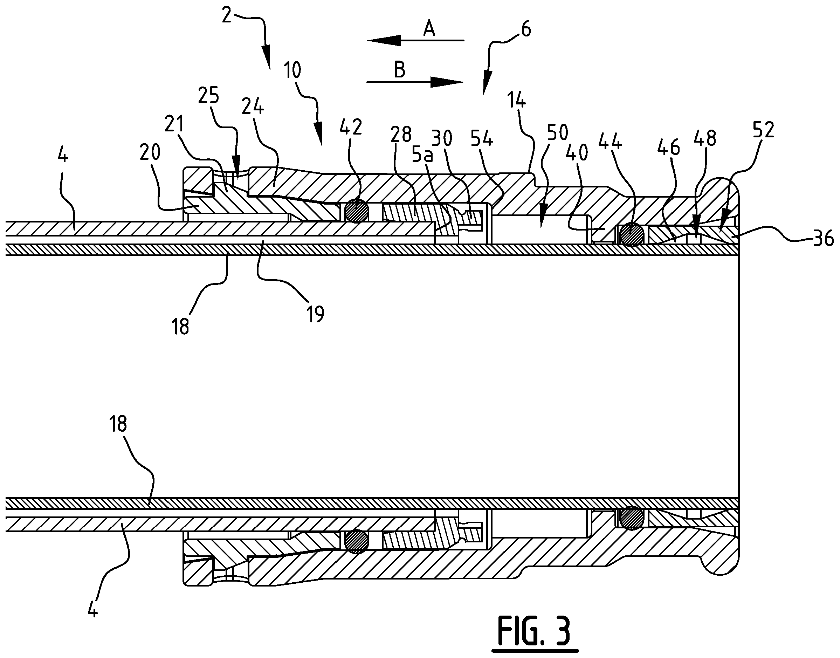

At first end 6 (figure 3) connecting element 28 is arranged on edge 5a of outer pipe 4. Connecting element 28 is annular with an L-shaped section, wherein outer pipe 4 is complementary to the L-shape. Connecting element 28 is provided with protrusions 30 to which an insert can be attached. Connecting element 28 is fixed on edge 5a by second sub-housing 24 which presses connecting element 28 onto outer pipe 4. Second sub-housing 24 is connected to first sub-housing 20 by means of protruding element 21 of first sub-housing 20 which protrudes into opening 25 of first sub-housing 24. First sub-housing 20 is arranged on outer pipe 4. Positioned between first sub-housing 20 and connecting element 28 is O-ring 42.

Second sub-housing 40 is provided with an inward directed edge 40 which is directed toward inner pipe 18. Half-open chamber 52 is defined between inner pipe 18 and second sub-housing 24 by inward directed edge 40. Arranged in half-open chamber 52 is sealing ring 36. Sealing ring 36 is provided with an inner wall 46 which is directed toward the outer surface of inner pipe 18. Inner wall 46 is provided with a concave curvature whereby recess 48 is created between sealing ring 36 and inner pipe 18. Inner pipe 18 can then be expanded in radial direction at the position of sealing ring 36, whereby inner pipe 18 is connected to sealing ring 36. Inner pipe 18 is hereby situated partially in recess 48. Positioned between inward directed edge 40 and sealing ring 36 is O-ring 44.

Second sub-housing 24 is further provided with protrusion edge 54 which is placed against protrusion 30 of connecting element 28. Because connecting element 28 is placed against edge 5a of outer pipe 4 and protrusion edge 54 against protrusion 30, second sub-housing 24 cannot move in direction A. Because inward directed edge 40 presses against O-ring 44 and O-ring 44 against sealing ring 36, and because sealing ring 36 is connected fixedly to inner pipe 18, second sub-housing 24 cannot move in direction B either. A tensively strong connection is hereby realized between housing 10, outer pipe 4 and inner pipe 18 with the shown embodiment.

Chamber 50 is defined between inward directed edge 40, connecting element 28, second sub-housing 24 and inner pipe 18. Chamber 50 is in fluid connection with passage 16. Chamber 50 is also in fluid connection with intermediate space 19 lying between inner pipe 18 and outer pipe 4. With first O-ring 42 and second O-ring 44 it is prevented that liquid is able to flow out of chamber 50 along respectively outer pipe 4 and inner pipe 18. Passage 16 can serve both as inlet and outlet. In the shown embodiment supplied shower water flows through intermediate space 19 and (warm) discharged shower water flows through inner pipe 18.

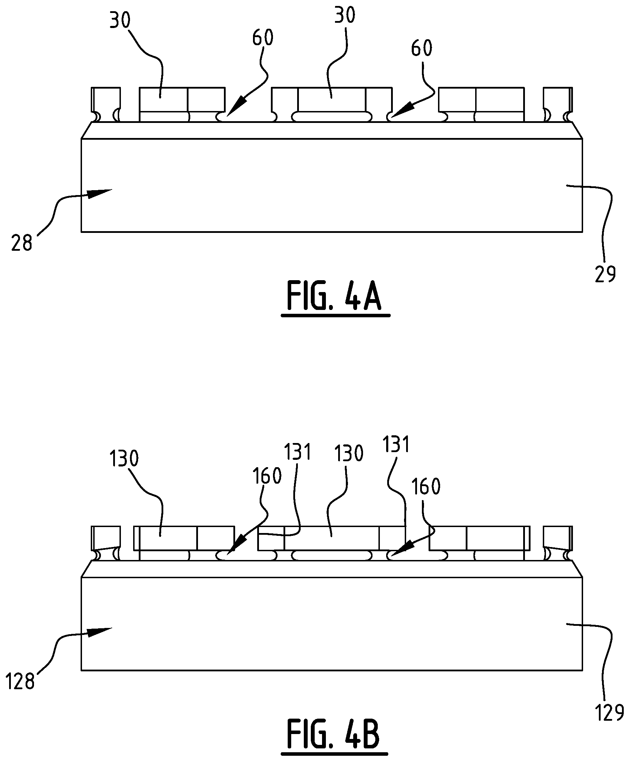

Connecting element 28 (figure 4A) is provided with a plurality of protrusions 30. At the position where protrusions 30 transition into annular body 29, protrusions 30 are provided with a groove 60. Groove 60, which serves as clamping recess, is embodied as an inward directed part of the wall of protrusion 30. Groove 60 enables an insert, for instance a wire, to be attached clampingly to protrusion 30 in simple manner.

Connecting element 128 (figure 4B) differs from connecting element 28 in figure 4A in that protrusions 130 are provided with projections 131. Projections 131 prevent an insert which is fastened to protrusion 130 from being able to slide off protrusion 130.

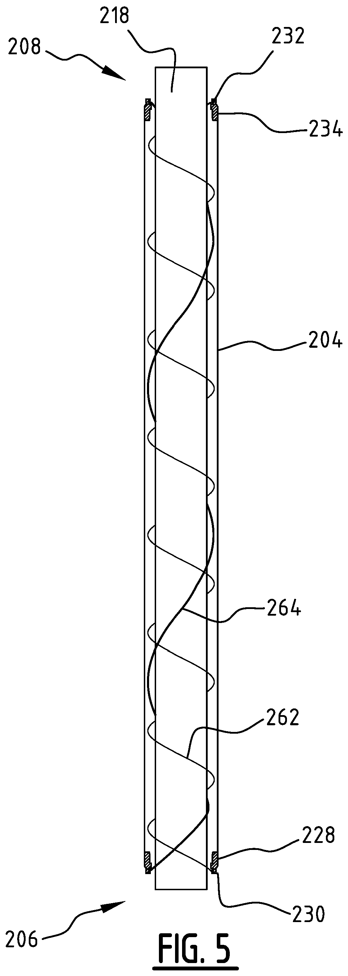

Inner pipe 218 (figure 5) extends from first end 206 to second end 208. Arranged round inner pipe 218 is outer pipe 204. Arranged on either side of outer pipe 204 are first connecting element 228 and second connecting element 232. Connected between first protrusions 230 of first connecting element 228 and second protrusions 234 of second connecting element 232 is insert 262, in the shown embodiment a copper wire. Insert 262 is wound round inner pipe 218 in spiral shape. Further connected between first protrusions 230 of first connecting element 228 and second protrusions 234 of second connecting element 232 is fixation element 262, in the shown embodiment likewise a metal wire, such as a copper wire or an iron wire. Fixation element 264 is wound round insert 262 in spiral shape in opposite direction and with greater pitch. Insert 262 is held substantially on the outer surface of inner pipe 218 by fixation element 264. In the shown embodiment the diameter of the wire of insert 262 is smaller than the diameter of the wire of fixation element 264.

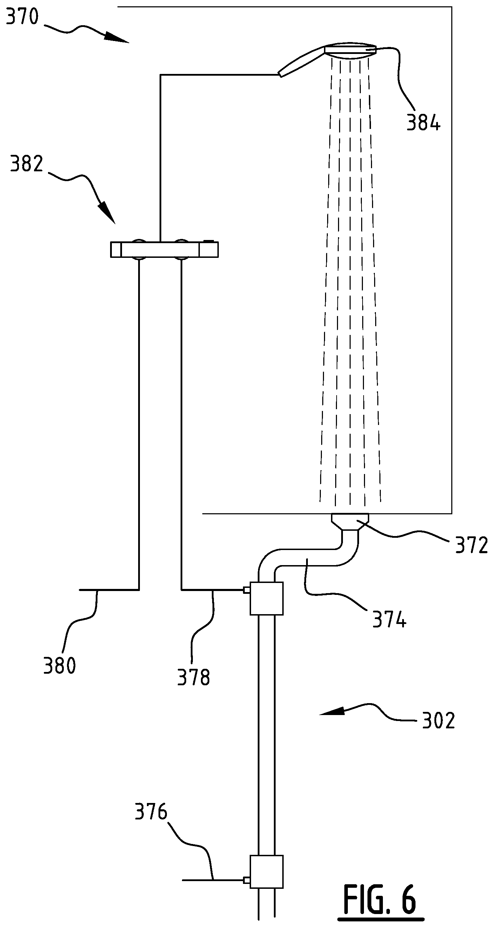

Shower 370 (figure 6) comprises a drain 372. From drain 372 the discharged shower water is carried with discharge conduit 374 to shower pipe 302. In shower pipe 302 heat from the warm discharged shower water is absorbed into supplied shower water. Supplied shower water is fed through supply conduit 376 into shower pipe 302. The heated supplied shower water is fed via throughfeed conduit 378 through to mixer tap 382. In mixer tap 382 the user can heat the heated supplied shower water further with warm water conduit 380 in order to obtain water with a desired temperature from shower head 384.

The present invention is by no means limited to the above described embodiments thereof. The rights sought are defined by the following claims, within the scope of which many modifications can be envisaged.

## Claims

1. Shower pipe for heat recovery, comprising:
- an inner pipe which is configured to feed through discharged shower water;
- an outer pipe which is arranged over the inner pipe, wherein an intermediate space lying between the inner pipe and the outer pipe is configured to feed through supplied shower water such that heat from the discharged shower water can be relinquished to the supplied shower water; and
- an insert which is arranged in the intermediate space and which is configured to break down the flow of the supplied shower water; and
- a connecting element which is arranged on an end part of the outer pipe, wherein the connecting element is provided with at least one protruding element, wherein the insert is connected to the protruding element.

2. Shower pipe according to claim 1, wherein the connecting element is annular.

3. Shower pipe according to claim 1 or 2, wherein the protruding element is a tongue or protrusion.

4. Shower pipe according to claim 3, wherein the tongue or protrusion is provided with a clamping recess for clamping of the insert.

5. Shower pipe according to any one of the foregoing claims, further comprising a housing arranged round the connecting element for the purpose of securing the connecting element onto the outer pipe.

6. Shower pipe according to claim 5, wherein the housing is connected to the inner pipe, wherein the connection between the housing and the inner pipe preferably comprises a tensively strong connection.

7. Shower pipe according to claim 6, wherein the housing further comprises an auxiliary ring which is arranged round an end part of the inner pipe and is provided with a hollow recess, wherein the inner pipe is attached to the auxiliary ring by radial expansion of the inner pipe into the hollow recess of the auxiliary ring.

8. Shower pipe according to any one of the foregoing claims, further comprising at least one O-ring.

9. Shower pipe according to claim 8, when dependent on at least claim 5, wherein the at least one O-ring is provided between the connecting element and the housing and/or between the auxiliary ring and the housing.

10. Shower pipe according to any one of the foregoing claims, wherein the insert is a wire, wherein the insert is preferably wound in spiral shape round an outer side of the inner pipe.

11. Shower pipe according to any one of the foregoing claims, further comprising a fixation element which is arranged round the insert and is configured to fix the insert, preferably fix it radially, relative to the inner pipe.

12. Shower pipe according to claim 11, wherein the fixation element is a wire, wherein the fixation element is preferably wound in spiral shape round an outer side of the inner pipe.

13. Shower provided with a shower pipe according to any one of the foregoing claims.

14. Method for manufacturing a shower pipe according to any one of the claims 1-12, comprising of:
- arranging a connecting element which is provided with at least one protruding element on an inner pipe;
- connecting an insert to the at least one protruding element;
- winding the insert around the outer periphery of the inner pipe; and
- inserting the inner pipe into an outer pipe for the purpose of realizing the shower pipe.
